(19) Europäisches Patentamt
European Patent Office
Office européen des brevets

(11) EP 0 914 400 B1

(12) **FASCICULE DE BREVET EUROPEEN**

(45) Date de publication et mention de la délivrance du brevet:
**02.01.2004 Bulletin 2004/01**

(21) Numéro de dépôt: **98917207.7**

(22) Date de dépôt: **23.03.1998**

(51) Int Cl.7: **C09K 7/08**

(86) Numéro de dépôt international:
**PCT/FR1998/000577**

(87) Numéro de publication internationale:
**WO 1998/044071 (08.10.1998 Gazette 1998/40)**

(54) **PROCEDE ET SYSTEME DE FORAGE A LA MOUSSE - COMPOSITION MOUSSANTE**

SCHAUM BOHR- METHODEN UND SYSTEMEN - SCHAUMENDE ZUSAMMENSETZUNG

DRILLING METHOD AND SYSTEM USING FOAM - FOAMING COMPOSITION

(84) Etats contractants désignés:
**GB IT NL**

(30) Priorité: **03.04.1997 FR 9704188**

(43) Date de publication de la demande:
**12.05.1999 Bulletin 1999/19**

(73) Titulaire: **Institut Français du Pétrole**
**92506 Rueil-Malmaison Cédex (FR)**

(72) Inventeurs:
- **ARGILLIER, Jean-François**
  **F-92210 SAINT-CLOUD (FR)**
- **AUDIBERT-HAYET, Annie**
  **F-78290 Croissy sur Seine (FR)**
- **ZEILINGER, Sabine**
  **Houston 77 025, Texas (US)**

(56) Documents cités:
**FR-A- 1 192 395**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 914 400 B1

## Description

L'invention concerne un procédé et un système pour la mise en oeuvre dans des puits d'exploitation souterraine pour le forage, le nettoyage ou les opérations de mise en production de ces puits, dans le cas de gisement. Dans le procédé, on effectue une circulation entre la surface du sol, le fond du puits et retour à la surface, à partir d'une colonne de tubes descendue dans le puits. L'injection de la mousse se fait généralement par l'intérieur des tubes et le retour par l'espace annulaire défini par les tubes et les parois du puits. Le fluide sous forme de mousse entraîne les débris de forage vers la surface, nettoyant ainsi le front de taille. Cette technique, dite de forage à la mousse, est connue et présente notamment les avantages de ne pas procurer une pression de fond trop importante grâce à la faible masse volumique de la mousse. Cependant, cette technique a pour inconvénient principal de ne pas permettre facilement le recyclage de la solution moussante, compte tenu des produits initialement mis en solution pour stabiliser la mousse après agitation et injection de gaz. Le "cassage" de la mousse est le problème de base, si l'on veut récupérer la plupart des produits moussants pour une utilisation répétée, ou si les conditions d'environnement ne permettent pas l'épandage du volume de mousse de retour du puits.

On connaît le document WO-94/17154 qui propose l'utilisation d'agent moussant amphotère combiné avec des tensioactifs comme base d'une composition moussante stable. La mousse est détruite par une variation appropriée du pH de la mousse. Si la mousse est basique, la mousse est cassée en diminuant le pH au moins en dessous de 4, si la mousse est acide, la mousse est cassée en augmentant le pH au moins au-dessus de 9,5.

La présente invention concerne un procédé de forage à la mousse obtenue à partir d'une solution aqueuse moussante comportant des tensioactifs non ioniques. La solution moussante présente une température critique appelée "température de point trouble" ou "point trouble".

Le point trouble est une température caractéristique pour une solution comportant au moins un tensioactif non ionique. On connaît la température de point de trouble en notant la température à laquelle un trouble apparaît dans la solution ou en connaissant le point de trouble du tensioactif contenu dans la solution, le point de trouble de la solution étant le point de trouble du tensioactif. Dans le cas d'un mélange de deux tensioactifs non ioniques, le point trouble est la moyenne des points troubles de chacun des deux composants.

On sait qu'en augmentant la température d'une solution au-dessus de la température du point trouble, la solution homogène et isotrope se sépare en deux phases homogènes et isotropes: une phase riche en tensioactif et une phase pauvre en tensioactif non ionique.

Ainsi la présente invention concerne un procédé de circulation d'une mousse dans un puits, dans lequel on effectue les étapes suivantes:

- on forme une mousse à partir d'une composition aqueuse comportant au moins un additif dont la température de point trouble et la concentration sont telles que la température de point de trouble de ladite composition est supérieure à la température de la mousse en cours de forage,
- on injecte ladite mousse dans le puits, ladite mousse circulant de la surface vers le fond du puits, puis du fond vers la surface,
- on élève la température de la mousse qui est remontée à la surface, à une température au moins supérieure à ladite température de point de trouble de la composition, de façon à déstabiliser la mousse.

Dans le procédé, l'additif peut être un tensioactif non ionique.

La température de point de trouble de la composition peut être augmentée par l'adjonction d'une quantité déterminée d'un tensioactif ionique.

La température de point de trouble de la composition peut être ajustée par l'adjonction d'une quantité déterminée d'électrolytes.

L'invention concerne également une composition moussante pour l'utilisation dans un puits foré dans le sol. La composition comporte en combinaison au moins un tensioactif non ionique et un additif constitué par un tensioactif ionique, un électrolyte ou leur mélange, le tensioactif non ionique et ledit additif ayant une structure et une concentration déterminées de façon à ajuster la température de point de trouble de ladite composition relativement à la température dudit puits.

On peut ajouter à la composition un agent viscosifiant.

L'invention concerne en outre un système pour circuler une mousse dans un puits foré dans le sol, comprenant :

- des moyens pour former une mousse à partir d'une composition aqueuse comportant au moins un additif dont la température de point trouble et la concentration sont telles que la température de point de trouble de ladite composition est supérieure à la température de la mousse dans le puits,
- des moyens d'injection de ladite mousse dans le puits, ladite mousse circulant de la surface vers le fond du puits,

puis du fond vers la surface.

Le système comporte des moyens de chauffage de la mousse qui est remontée à la surface, à une température au moins supérieure à ladite température de point de trouble de la composition, de façon à déstabiliser la mousse.

Le point trouble d'une solution de tensioactif non ionique dépend de la concentration en tensioactif et des autres éventuels additifs (autres tensioactifs, électrolytes, composantes polaires organiques, ou alcools). Le point trouble dépend aussi des modifications moléculaires: longueur de chaîne, branchement..... De cette façon, dans la présente invention, on ajuste la température du point trouble d'une solution selon le domaine d'utilisation.

En ajoutant des faibles quantités de tensioactif ionique (par exemple dodecyl sulfate de sodium, SDS) la répulsion électrostatique entre les micelles de tensioactif augmente, ce qui provoque l'augmentation de la température du point trouble.

En ajoutant des électrolytes, la température du point trouble de la solution peut augmenter ou diminuer suivant le type d'électrolytes utilisées (effet « salting in » ou « salting out » des cations ou anions). A titre d'exemple, en ajoutant du NaCl ou du CaCl2, la température du point trouble diminue, alors qu'avec du LiNO3, la température augmente. On peut citer en référence : « salt effect on solutions of non ionic surfactants and its influence on the stability of polymerized microemulsions » par C. Holzcherer et F. Candau. Journal of Colloïd and Interface Science. Vol 125, no 1, page 97-110 (1988).

Le point trouble peut être également modifié par une augmentation de la masse moléculaire de tensioactif, par des branchements des parties hydrophobes, ou par la distribution des longueurs des chaînes hydrophobes dans la molécule.

Comme tensioactif, il est envisageable dans la présente invention d'utiliser tous les tensioactifs non ioniques classiques et connus.

Les produits tensioactifs non ioniques peuvent être classés selon le mode de liaison entre la partie hydrophobe et la partie hydrophile de la molécule. Ce mode de liaison peut être un pont éther, un pont ester, un pont amide, ou autres :

- Dérivés non ioniques à pont éther, par exemple :

  Alcools gras oxyéthylés,
  Alkylphénols oxyéthylés,
  Produits oxyéthylés-oxypropylés,
  Ethers de glucose.

- Agents de surface non ioniques à pont ester, par exemple :

  Esters de glycérol,
  Esters de polyéthylèneglycols,
  Esters de sorbitanne,
  Esters de sucre.

- Non ioniques à liaisons amides :

  Diéthanolamides,

- Autres non ioniques : par exemple les amines grasses éthoxylées.

On peut citer également : les alkanolamides éthoxylées, les amines éthoxylées, ou les copolymères bloc d'oxyde d'éthylène ou de propylène.

On pourra utiliser, dans la présente invention, un octylphénol éthoxylé avec une longueur de chaîne d'oxyde d'éthylène de 9 à 10 (Triton-X-100) ou avec un longueur de chaîne d'oxyde d'éthylène de 7 à 8 (Triton-X-114) (nom de marque de tensioactifs fabriqués par Union Carbide- USA) de point trouble respectivement 67°C et 25°C. Pour des températures de fond de puits supérieures, on peut utiliser du Triton-X-102 de longueur de chaîne 12 à 13 (point trouble 88°C), du Triton-X-165 de longueur de chaîne 16 (point trouble supérieur à 100°C), ou un mélange de Triton-X-100 et de 7,5 $10^{-5}$ mol/l de SDS (point trouble 73°C).

En faisant varier la longueur du groupe hydrophobe et du groupe hydrophile du tensioactif, on fait varier la température de point trouble.

Un additif pour augmenter le point trouble peut être de préférence un tensioactif de type dodécyl sulfate de sodium (SDS).

Un additif pour ajuster le point trouble peut être du chlorure de sodium (NaCl).

La solution moussante peut contenir un polymère pour augmenter la viscosité et ainsi la stabilité de la mousse.

La solution moussante peut également, comme tous les fluides de puits, contenir des solides ou d'autres additifs (anticorrosion, etc...).

La présente invention sera mieux comprise et ses avantages apparaîtront plus nettement à la lecture des essais, nullement limitatifs, décrits ci-après et illustrés par les figures ci-annexées, parmi lesquelles :

- les figures 1 à 4 montrent l'évolution de la vitesse de drainage de la mousse en fonction de la température,
- la figure 5 montre schématiquement un système de mise en oeuvre de la présente invention.

Les essais sont fondés principalement sur la comparaison, pour des tensioactifs non ioniques et éventuellement au moins un additif de contrôle de la température de point trouble, des deux mesures suivantes effectuées sur la solution moussante ou sur la mousse formée à partir de ladite solution moussante:

- la vitesse de drainage VD, qui permet de caractériser la stabilité de la mousse formée, en fonction de la température.
- la viscosité μ (mPa.s) de la solution moussante, pour vérifier que l'augmentation de la vitesse de drainage n'est pas principalement due à une variation de la viscosité de la solution moussante.

<u>Mode opératoire:</u>

La solution moussante est constituée par un mélange d'au moins un tensioactif non ionique de concentration 1% et dans certains cas d'un tensioactif ionique à concentration variable. On mesure la viscosité de la solution moussante en fonction de la température, à l'aide des moyens conventionnels pour une telle mesure. Les valeurs de viscosité sont reportées dans les tableaux des essais 1 à 4. La mousse est obtenue à partir de 200 ml de solution moussante par agitation à l'aide d'un fouet. La vitesse de rotation est d'environ 2000 tours/minute. Le temps d'agitation est de 2 minutes. Lorsque les essais sont effectués à une température supérieure à la température ambiante, la solution moussante et le contenant en verre sont chauffés dans une étuve à la température de l'essai. L'agitation se fait à température ambiante. La mousse formée est versée dans un entonnoir en verre gradué, et l'entonnoir est placé dans l'étuve, préchauffée à la température de l'essai. La température de la mousse est délicate à régler, car elle a une bonne isolation thermique. La température de la mousse est ici mesurée par un thermo-couple directement en contact avec la mousse.

On note le volume de solution drainée en fonction du temps. La stabilité de la mousse est caractérisée par sa vitesse de drainage VD. La vitesse de drainage est définie à partir de l'équation empirique qui décrit le volume drainé V en fonction du temps (Bikerman, J.J., 1973):

$$V=V_o(1-\exp(-kt))$$

V : le volume drainé ($cm^3$)
$V_o$ : le volume de solution moussante ($cm^3$)
t :temps (min.)

$$VD = kV_0/2 \ (cm^3/min.)$$

Une faible valeur de VD indique que la mousse est stable.

Pour s'affranchir en partie de la diminution de la viscosité en fonction de la température, on a tracé les graphes 1 à 4, représentant les essais 1 à 4, avec en abscisse la température en degré Celsius, et en ordonnée le rapport VD/μ (cm3/min.mPa.s)

<u>Définitions des systèmes testés</u>

<u>Tensioactifs</u>

Octylphénol éthoxylé:

- Triton-X-100 ($CPE_{9-10}$): tensioactif non ionique de formule suivante:

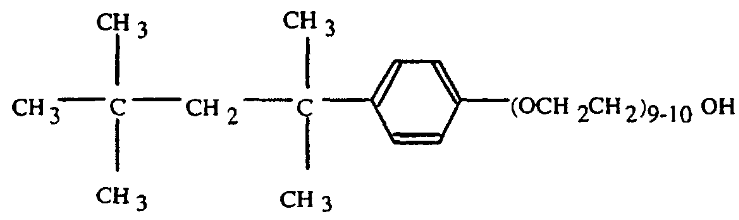

- Triton-X-114 ($CPE_{7-8}$): tensioactif non ionique de formule suivante:

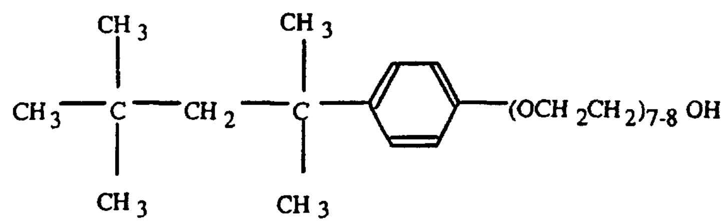

- Dodécyl sulfate de sodium (SDS): tensioactif ionique de formule suivante:

$$CH_3—(CH_2)_{10}—CH_2—O—SO_3^- Na^+$$

Polymère:

**[0034]** * Carboxymethylcellulose (CMC): le degré de substitution moyen de groupements carboxyliques par cycle cellulosique de l'échantillon étudié est proche de 1. Sa masse moléculaire est environ de $2x10^6$ g/mol.

**Essai 1: Tensioactif non ionique à différentes températures :**

**[0035]** - 1% de Triton-X-100, PT= 67°C, sans autre additif.

| Température (°C) | Vitesse de Drainage (ml/min.) | Volume de Mousse ($cm^3$) | Viscosité (mPa s) | VD/μ |
|---|---|---|---|---|
| 20 | 22 | 2100 | 1,08 | 20,4 |
| 30 | 28 | 2100 | 0,88 | 31,8 |
| 43 | 36 | 2100 | 0,74 | 48,2 |
| 60 | 50 | 2100 | 0,64 | 88,1 |
| 70 | 61 | 2100 | 0,51 | 112 |

Cet essai a été effectué sur une composition moussante ne comportant pas d'additif supplémentaire au tensioactif non ionique, de façon à mettre en évidence l'importance du point trouble sur la stabilité d'une mousse. Sur la figure 1, PT représente la valeur de température du point trouble, ici environ 67°C.

On note qu'en dessous du point trouble, l'évolution du rapport VD/μ est directement fonction de l'évolution de la viscosité μ. Mais au dessus du point trouble, ce rapport croit de façon très sensible, ce qui montre une perte de stabilité de la mousse.

**Essai 2: Mélange de tensioactifs non ioniques à différentes températures :**

**[0038]** - 0,5% de Triton-X-100 et 0,5% de Triton-X-114. Point trouble du mélange : 48°C.

| Température (°C) | Vitesse de Drainage (ml/min.) | Volume de Mousse ($cm^3$) | Viscosité (mPa.s) | VD/µ |
|---|---|---|---|---|
| 20 | 23 | 2000 | 1,07 | 21,3 |
| 40 | 28 | 2000 | 0,79 | 35,2 |
| 60 | 43 | 2000 | 0,57 | 75,3 |

Les essais 2 donnent la vitesse de drainage d'une solution comportant du Triton-X-100 (PT= 67°C) ou du Triton-X-114 (PT= 25°C), en fonction de la température. On observe que la stabilité de mousse est en diminution quand la température dépasse le point trouble PT de 48°C pour le mélange de Triton-X-100 et de Triton-X-114.

Les pentes de la courbe représentée sur la figure 2 montrent bien que la mousse perd de sa stabilité au dessus du point trouble de la composition moussante, ici sensiblement la moyenne entre les points troubles des deux tensioactifs non ioniques en mélange.

**Essai 3: <u>Mélange d'un tensioactif non ionique et d'un tensioactif ionique à différentes températures :</u>**

**[0041]** - 1% de Triton-X-114 et $10^{-4}$ mol/l de SDS, point trouble du mélange 35°C.

| Température (°C) | Vitesse de Drainage (ml/min.) | Volume de Mousse ($cm^3$) | Viscosité (mPa.s) | VD/µ |
|---|---|---|---|---|
| 20 | 11 | 1800 | 1,08 | 10,2 |
| 30 | 12 | 1800 | 0,88 | 13,6 |
| 59 | 13 | 1800 | 0,64 | 20,8 |
| 70 | 18 | 1800 | 0,51 | 35,4 |

Dans cet exemple le mélange d'un tensioactif non ionique (Triton-X-114) avec une faible concentration de tensioactif anionique du type SDS ($10^{-4}$ mol/l) augmente la température de point trouble de 25 à 35°C. Quand la température de la mousse est au-dessus du point trouble, la stabilité de la mousse diminue. Sur la figure 3, la pente de la courbe est nettement en augmentation au dessus d'environ 50°C.

**Essai 4: <u>Mélange d'un tensioactif non ionique et d'un polymère à différentes températures :</u>**

**[0043]** - 1% de Triton-X-114 et 500 ppm de CMC, point trouble 63°C.

| Température (°C) | Vitesse de Drainage (ml/min.) | Volume de Mousse ($cm^3$) | Viscosité (mPa s) | VD/µ |
|---|---|---|---|---|
| 20 | 5 | 1800 | 22 | 0,23 |
| 44 | 8 | 1800 | 18 | 0,43 |
| 75 | 11 | 1800 | 10 | 1,11 |

Dans cet essai, on utilise un mélange de tensioactif non ionique avec un polymère viscosifiant (CMC). Le point trouble PT du mélange tensioactif et polymère est environ 63°C. La solution est plus visqueuse compte tenu de la présence du polymère, même au-dessus de 50°C. On observe également qu'au-dessus du point trouble la vitesse de drainage augmente, même à plus forte viscosité de la composition moussante.

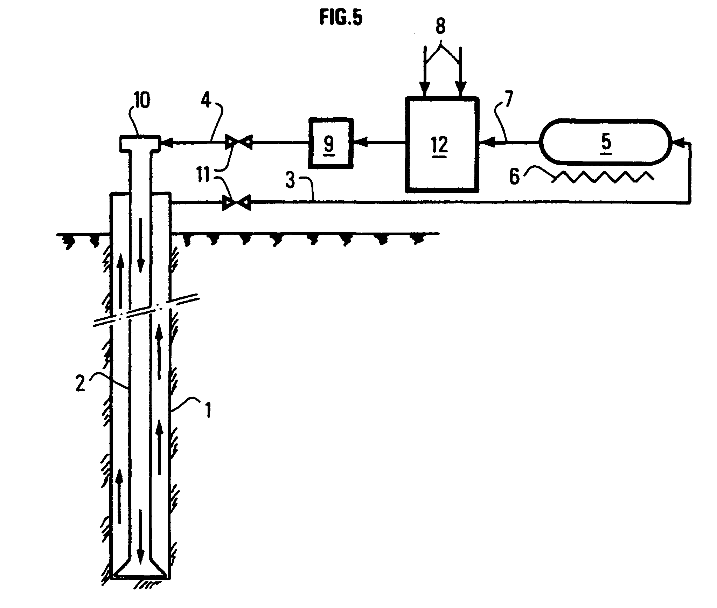

La figure 5 montre schématiquement une réalisation d'un système de mise en oeuvre du procédé et de la composition moussante selon la présente invention.

La référence 1 désigne un puits foré dans le sous-sol. La référence 2 représente une garniture de tubes descendue dans le puits 1. Cette garniture peut être une garniture de forage, un tube de cuvelage (casing) ou un tube de production (tubing). L'invention s'applique à tous les tubes que l'on peut être amené à descendre dans un puits, y compris des tubes continus enroulés (coiled-tubing). Les flèches montrent un exemple de circulation d'un fluide (dans le cas présent, il s'agit de mousse) dans un puits. En tête de puits, un canalisation 3 (flowline) collecte la mousse qui remonte dans l'annulaire vers la surface, pour l'amener vers une installation 5 de « cassage » de la mousse comprenant

des moyens de chauffage 6 de la mousse et de réception du liquide obtenus après déstabilisation de la mousse. Le liquide est ensuite dirigé par la conduite 7 vers une installation 12 de séparation, de préparation ou/et de régénération de la composition moussante. Les apports de fluides et additifs complémentaires sont schématisés par les flèches 8. C'est dans cette installation 12 que l'on sépare la composition moussante des solides provenant du puits 1 et entraînés à la surface par la mousse. On y contrôle également la qualité de la composition moussante afin de l'utiliser pour un autre cycle de circulation dans le puits.

La composition moussante passe ensuite dans des moyens de pompage et d'injection 9, conventionnellement utilisés pour injecter de la mousse dans le puits 1 par la conduite 4 et la tête d'injection 10 fixée à la garniture 2.

Les symboles 11 représentent des vannes de fermeture des canalisations.

Bien entendu, le sens de circulation de la mousse dans le puits peut être « inverse », comme cela est connu dans la profession, c'est à dire que la mousse est injectée dans l'annulaire par la conduite 3 et remonte à la surface par la garniture de tubes 2 et la conduite 4. Un manifold dirige le retour de la mousse vers l'installation 5, la conduite 3 étant reliée à l'installation 9.

Le fonctionnement du système de forage à la mousse est le suivant :

La composition moussante est injectée par le dispositif 9 avec du gaz dans la tête d'injection 10. La mousse sous pression descend dans l'intérieur de la garniture 2 puis sort au niveau du fond du puits. La mousse se détend et se dilate en fonction notamment de la pression de fond du puits. La température de la mousse tend à atteindre la température du puits. La mousse remonte dans l'annulaire tubes/puits en entraînant des débris de forage, si l'on est en phase de forage. Pour que la mousse soit efficace pour le nettoyage du puits, il faut que la température de la mousse atteinte au fond du puits soit inférieure à la température du point trouble de la solution moussante. De retour à la surface, par la conduite 3, la mousse est conduite vers les moyens 5 de « cassage » de la mousse selon le procédé de la présente invention. A la sortie, le gaz est évacué et une solution aqueuse est dirigée vers le dispositif 12 comprenant notamment des moyens de séparation des solides et/ou des gaz contenus dans une phase liquide : hydrocyclone, dégazeur, décanteur, tamis,... A l'aide de des moyens de mesure, on contrôle la qualité de la phase aqueuse recueillie afin de l'utiliser dans un nouveau cycle.

## Revendications

**1.** Procédé de circulation d'une mousse dans un puits, dans lequel on effectue les étapes suivantes:

- on forme une mousse à partir d'une composition aqueuse comportant au moins un additif dont la température de point trouble et la concentration sont telles que la température de point de trouble de ladite composition est supérieure à la température de la mousse en cours de forage,
- on injecte ladite mousse dans le puits, ladite mousse circulant de la surface vers le fond du puits, puis du fond vers la surface,
- on élève la température de la mousse qui est remontée à la surface, à une température au moins supérieure à ladite température de point de trouble de la composition, de façon à déstabiliser la mousse.

**2.** Procédé selon la revendication 1, dans lequel ledit additif est un tensioactif non ionique.

**3.** Procédé selon la revendication 2, dans lequel la température de point de trouble de ladite composition est augmentée par l'adjonction d'une quantité déterminée d'un tensioactif ionique.

**4.** Procédé selon la revendication 2, dans lequel la température de point de trouble de ladite composition est ajustée par l'adjonction d'une quantité déterminée d'électrolytes.

**5.** Composition moussante pour l'utilisation dans un puits foré dans le sol, **caractérisée en ce qu'**elle comporte en combinaison au moins un tensioactif non ionique et un additif constitué par un tensioactif ionique, un électrolyte ou leur mélange, ledit tensioactif non ionique et ledit additif ayant une structure et une concentration déterminées de façon à ajuster la température de point de trouble de ladite composition relativement à la température dudit puits.

**6.** Composition selon la revendication 6, dans laquelle on ajoute un agent viscosifiant.

**7.** Système pour circuler une mousse dans un puits (1) foré dans le sol, comprenant :

- des moyens (9) pour former une mousse à partir d'une composition aqueuse comportant au moins un additif dont la température de point trouble et la concentration sont telles que la température de point de trouble de

ladite composition est supérieure à la température de la mousse dans le puits,

• des moyens d'injection (10, 2) de ladite mousse dans le puits, ladite mousse circulant de la surface vers le fond du puits, puis du fond vers la surface,

**caractérisé** en qu'il comporte des moyens de chauffage (5) de la mousse qui est remontée à la surface, à une température au moins supérieure à ladite température de point de trouble de la composition, de façon à déstabiliser la mousse.

## Claims

**1.** A method of circulating a foam in a well, wherein the following stages are carried out :

- forming a foam from an aqueous composition comprising at least one additive whose cloud point temperature and concentration are such that the cloud point temperature of said composition is higher than the temperature of the foam during drilling,

- injecting said foam into the well, said foam circulating from the surface to the well bottom, then from the bottom to the surface,

- raising the temperature of the foam that has returned to the surface to a temperature at least higher than said cloud point temperature of the composition so as to destabilize the foam.

**2.** A method as claimed in claim 1, wherein said additive is a non-ionic surfactant.

**3.** A method as claimed in claim 2, wherein the cloud point temperature of said composition is raised by adding a determined amount of an ionic surfactant.

**4.** A method as claimed in claim 2, wherein the cloud point temperature of said composition is adjusted by adding a determined amount of electrolytes.

**5.** A foaming composition for use in a well drilled in the ground, **characterized in that** it comprises in combination at least one non-ionic surfactant and an additive consisting of an ionic surfactant, an electrolyte or a mixture thereof, said non-ionic surfactant and said additive having a determined structure and concentration so as to adjust the cloud point temperature of said composition in relation to the temperature of said well.

**6.** A composition as claimed in claim 5, wherein a viscosifying agent is added thereto.

**7.** A system for circulating a foam in a well (1) drilled in the ground, comprising :

- means (9) for forming a foam from an aqueous composition comprising at least one additive whose cloud point temperature and concentration are such that the cloud point temperature of said composition is higher than the temperature of the foam in the well,

- means (10, 2) for injecting said foam into the well, said foam circulating from the surface to the well bottom, then from the bottom to the surface,

**characterized in that** it comprises means (5) for heating the foam that has returned to the surface to a temperature at least higher than said cloud point temperature of the composition so as to destabilize the foam.

## Patentansprüche

**1.** Verfahren zur Zirkulation eines Schaums in einem Bohrloch, in welchem die folgenden Stufen durchgeführt werden :

- ein Schaum wird mittels einer wäßrigen Mischung gebildet, die wenigstens ein Additiv, dessen Trübungspunkttemperatur und Konzentration so abgestimmt sind, daß die Trübungspunkttemperatur der besagten Mischung

höher als die Temperatur des Schaums im Laufe der Bohrarbeit ist, enthält,

- der besagte Schaum wird in das Bohrloch injiziert, wobei der besagte Schaum von der Oberfläche zum Bohrlochboden, dann von dem Boden zu der Oberfläche zirkuliert,

- die Temperatur des Schaums, der an die Oberfläche zurückgekommen ist, wird zu einer Temperatur erhöht, die wenigstens höher als die besagte Trübungspunkttemperatur der Mischung ist, um den Schaum zu destabilisieren.

**2.** Verfahren gemäß Anspruch 1, in welchem das besagte Additiv ein nichtionischer oberflächenaktiver Stoff ist.

**3.** Verfahren gemäß Anspruch 2, in welchem die Trübungspunkttemperatur der besagten Mischung durch Zugabe einer bestimmten Menge eines ionischen oberflächenaktiven Stoffes erhöht wird.

**4.** Verfahren gemäß Anspruch 2, in welchem die Trübungspunkttemperatur der besagten Mischung durch Zugabe einer bestimmten Menge von Elektrolyten angepaßt wird.

**5.** Schäumende Mischung zur Verwendung in einem Bohrloch, **dadurch gekennzeichnet, daß** sie wenigstens einen nicht-ionischen oberflächenaktiven Stoff und ein aus einem ionischen oberflächenaktiven Stoff bestehendes Additiv, einen Elektrolyt oder eine Mischung derselben enthält, wobei der besagte nicht-ionische oberflächenaktive Stoff und das besagte Additiv eine bestimmte Zusammensetzung und Konzentration haben, sodaß die Trübungspunkttemperatur der besagten Mischung im Vergleich zu der Temperatur des besagten Bohrlochs angepaßt wird.

**6.** Mischung gemäß Anspruch 5, in welcher ein Viskositäts-Verbesserer zugegeben wird.

**7.** System zur Zirkulation eines Schaums in einem Bohrloch (1), das die folgenden Mittel enthält :

- Mittel (9) zur Bildung eines Schaums mittels einer wäßrigen Mischung, die wenigstens ein Additiv, dessen Trübungspunkttemperatur und Konzentration so abgestimmt sind, daß die Trübungspunkttemperatur der besagten Mischung höher als die Temperatur des Schaums im Bohrloch ist, enthält,

- Mittel (10, 2) zur Injektion des besagten Schaums in das Bohrloch, wobei der besagte Schaum von der Oberfläche zum Bohrlochboden, dann von dem Boden zu der Oberfläche zirkuliert,

**dadurch gekennzeichnet, daß** es Mittel (5) zur Erhitzung des Schaums, der an die Oberfläche zurückgekommen ist, enthält, zu einer Temperatur, die wenigstens höher als die besagte Trübungspunkttemperatur der Mischung ist, um den Schaum zu destabilisieren.

FIG.1

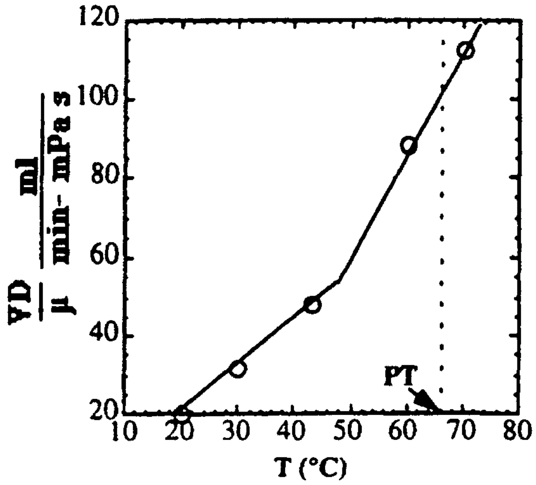


FIG.2

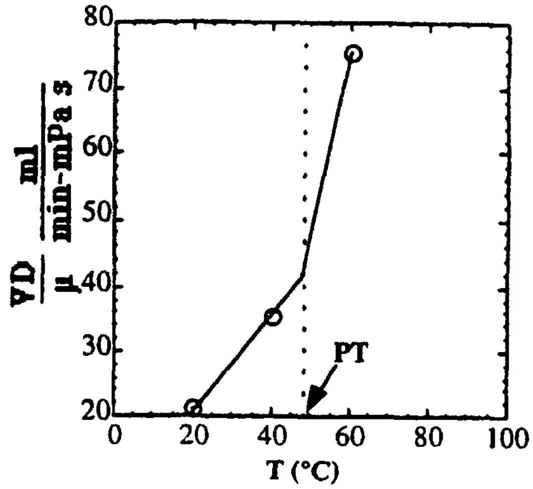


FIG.3

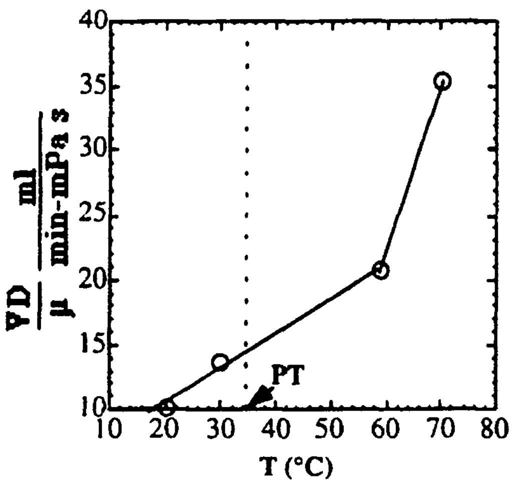


FIG.4

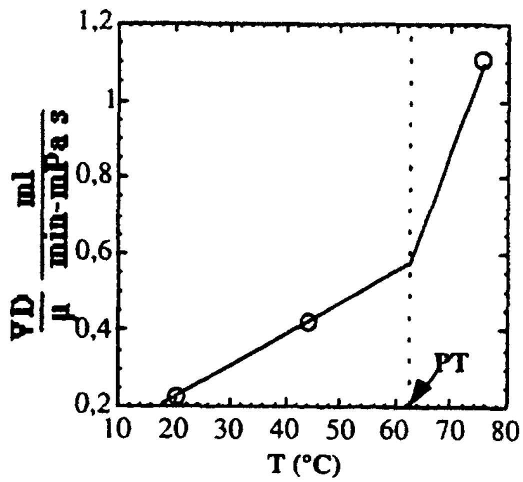

FIG.5